# EUROPEAN PATENT APPLICATION

(11) **EP 4 654 316 A1**
(43) Date of publication of application: **26.11.2025**
(21) Application number: 23931252.3
(22) Date of filing: 04.04.2023
(51) Int. Cl.: H01M 10/0567, H01M 4/38, H01M 10/0565, H01M 4/587, H01M 10/0525, H01M 10/0585, H01M 4/36, H01M 4/48

(54) **SECONDARY BATTERY AND PREPARATION METHOD THEREFOR, AND ELECTRIC DEVICE**

(71) Applicant: Contemporary Amperex Technology Co., Limited, Ningde, Fujian 352100 (CN)
(72) Inventor: WU, Lili, Ningde, Fujian 352100 (CN); CHEN, Xingbu, Ningde, Fujian 352100 (CN); LIU, Rundie, Ningde, Fujian 352100 (CN); SUN, Xin, Ningde, Fujian 352100 (CN); YE, Yonghuang, Ningde, Fujian 352100 (CN); JIN, Haizu, Ningde, Fujian 352100 (CN)
(74) Representative: Ziebig Hengelhaupt Intellectual Property Attorneys Patentanwaltskanzlei PartGmbB
(86) International application number: PCT/CN2023/086123
(87) International publication number: WO 2024/207179

(57) **Abstract**

Provided in the present application are a secondary battery and a preparation method therefor, and an electric device. The secondary battery comprises a positive electrode sheet, a separator, a negative electrode sheet and an electrolyte, wherein the separator is arranged between the positive electrode sheet and the negative electrode sheet; the electrolyte comprises an electrolytic solution and a first gel electrolyte membrane; the first gel electrolyte membrane is arranged between the negative electrode sheet and the separator; a solidification ratio of the electrolyte is 60%-95%; the thickness of the first gel electrolyte membrane is aµm; and the surface capacity of the negative electrode sheet is b mAh cm⁻², and a/b is 0.1-1.5. The secondary battery of the present application not only has relatively good cycle performance, but also has a relatively high volume energy density.

## Description

### TECHNICAL FIELD

The present application relates to the technical field of batteries, and in particular, to a secondary battery and a preparation method therefor, and an electric device.

### BACKGROUND

In recent years, with the increasingly widespread application of secondary batteries, they have been extensively used in energy storage power systems such as hydropower, thermal power, wind power, and solar power stations, as well as in various fields such as electric tools, electric bicycles, electric motorcycles, electric vehicles, and aerospace.

As secondary batteries have achieved great development, higher requirements have been placed on their performance. Cycle performance and energy density are two very important performance indicators of secondary batteries. Therefore, the search for a secondary battery having more excellent cycle performance and energy density is one of the directions of interest to those skilled in the art.

### SUMMARY

The present application is made in view of the above problems, and an objective thereof is to provide a secondary battery having good cycle performance and high energy density.

In order to achieve the above objective, a first aspect of the present application provides a secondary battery, which includes a positive electrode plate, a separator, a negative electrode plate, and an electrolyte; where
the separator is disposed between the positive electrode plate and the negative electrode plate;
the electrolyte includes an electrolytic solution and a first gel electrolyte membrane, where the first gel electrolyte membrane is disposed between the negative electrode plate and the separator, a solidification ratio of the electrolyte is 60% to 95%, a thickness of the first gel electrolyte membrane is a µm, an areal capacity of the negative electrode plate is b mAh cm⁻², and a/b is 0.1 to 1.5.

In the present application, the first gel electrolyte membrane is disposed between the negative electrode plate and the separator, and the solidification ratio of the electrolyte is controlled within the range of 60% to 95%, such that more electrolytic solution can be kept between the negative electrode plate and the separator by means of the liquid absorption function of the first gel electrolyte membrane, and it can be ensured that enough electrolytic solution enters the negative electrode plate during the expansion and contraction of the negative electrode plate, thereby improving the cycle performance of the secondary battery. Moreover, the ratio a/b of the thickness of the first gel electrolyte membrane to the areal capacity of the negative electrode plate is controlled within the range of 0.1 to 1.5, which can not only ensure that enough electrolytic solution enters the negative electrode plate during the expansion and contraction of the negative electrode plate, thereby ensuring the cycle performance of the secondary battery, but also ensure that the first gel electrolyte membrane is not too thick, which will not have a great impact on the rate capability of the secondary battery, and can make the secondary battery have a high volumetric energy density.

In any embodiment, a ratio a/b of the thickness of the first gel electrolyte membrane to the areal capacity of the negative electrode plate is 0.15 to 1.2. In this way, it can be better ensured that enough electrolytic solution enters the negative electrode plate during the expansion and contraction of the negative electrode plate, thereby ensuring the cycle performance of the secondary battery, and further improving the volumetric energy density of the secondary battery.

In any embodiment, the ratio a/b of the thickness of the first gel electrolyte membrane to the areal capacity of the negative electrode plate is 0.28 to 0.95. In this way, the cycle performance and the volumetric energy density of the secondary battery can be further improved.

In any embodiment, a solidification ratio of the electrolyte is 70% to 90%. In this way, it can be further ensured that enough electrolytic solution enters the negative electrode plate during the expansion and contraction of the negative electrode plate, which is beneficial to improving the cycle performance of the secondary battery.

In any embodiment, the a is 1 to 10. In this way, the secondary battery can have good cycle performance and high volumetric energy density.

In any embodiment, the a is 2 to 4. This is more conducive to improving the cycle performance and the volumetric energy density of the secondary battery.

In any embodiment, the b is 3 to 10. The secondary battery has a high battery capacity.

In any embodiment, the b is 4.2 to 7.

In any embodiment, the electrolyte further includes a second gel electrolyte membrane, the second gel electrolyte membrane being disposed between the positive electrode plate and the separator. In this way, a part of the electrolytic solution of the electrolyte can be kept between the positive electrode plate and the separator by means of the liquid absorption function of the second gel electrolyte membrane, so as to ensure that enough electrolytic solution enters the positive electrode plate during the expansion and contraction of the positive electrode plate, thereby further improving the cycle performance of the secondary battery.

In any embodiment, a thickness of the second gel electrolyte membrane is smaller than the thickness of the first gel electrolyte membrane. In this way, under the condition of improving the cycle performance of the secondary battery, the thickness of the second gel electrolyte membrane is not too large, thereby better improving the volumetric energy density of the secondary battery.

In any embodiment, the thickness of the second gel electrolyte membrane is c µm, and the c is 0.1 to 2. In this way, the cycle performance and the volumetric energy density of the secondary battery can be further improved.

In any embodiment, the electrolyte further includes a gel electrolyte filled in internal pores of the positive electrode plate and/or the negative electrode plate. In this way, the volume expansion of the electrode plate during charging and discharging can be effectively buffered, and the liquid retention amount of the electrolytic solution inside the electrode plate can be further improved, thereby further improving the cycle performance of the secondary battery.

In any embodiment, an active material of the negative electrode plate contains a silicon-based material. The energy density of the secondary battery can be improved.

In any embodiment, a mass ratio of the silicon-based material in the active material of the negative electrode plate is ≥ 10%.

In a second aspect of the present application, provided is a method for preparing the secondary battery according to the first aspect of the present application, which includes:
providing a negative electrode plate, and forming a metallic lithium layer on a surface of the negative electrode plate;
stacking the negative electrode plate, a separator, and a positive electrode plate in sequence to form a bare cell, where the metallic lithium layer is located between the negative electrode plate and the separator;
placing the bare cell in a shell, injecting electrolyte raw materials, and dissolving the metallic lithium layer, where the electrolyte raw materials include an electrolyte salt, a solvent, a polymer monomer, and an initiator; and
partially solidifying the electrolyte raw materials in the bare cell to form an electrolyte, and forming a first gel electrolyte membrane at a position where the metallic lithium layer is not dissolved.

According to the preparation method of the present application, the thickness of the first gel electrolyte membrane can be adjusted by controlling the thickness of the metallic lithium layer preset on the surface of the negative electrode plate, thereby preparing the secondary battery having the first gel electrolyte membrane with a certain thickness between the negative electrode plate and the separator of the present application, and the preparation process is simple.

In any embodiment, a solidification ratio of the electrolyte is 60% to 95%, a thickness of the first gel electrolyte membrane is a µm, an areal capacity of the negative electrode plate is b mAh cm⁻², and a/b is 0.1 to 1.5.

In any embodiment, the polymer monomer includes one or more of a carbonate monomer, a sulfone monomer, an isocyanate monomer, an amide monomer, a nitrile monomer, a fluorinated monomer, an ether compound monomer, an ether segment-containing oligomer, and a siloxane.

In any embodiment, the initiator includes one or more of an azo initiator, a peroxide initiator, an anionic/cationic initiator, an organometallic compound initiator, an amine catalyst initiator, and an organophosphorus initiator. Through in-situ polymerization and solidification of the above polymer monomer and the initiator inside the bare cell, a gel electrolyte is formed, thereby obtaining an electrolyte including both gel-state electrolyte and electrolytic solution.

In a third aspect of the present application, provided is an electric device, which includes the secondary battery according to the first aspect of the present application.

According to the secondary battery of the present application, the first gel electrolyte membrane is disposed between the negative electrode plate and the separator, the solidification ratio of the electrolyte is controlled within the range of 60% to 95%, and the ratio a/b of the thickness of the first gel electrolyte membrane to the areal capacity of the negative electrode plate is controlled within the range of 0.1 to 1.5, such that the secondary battery not only has good cycle performance, but also has high volumetric energy density.

### BRIEF DESCRIPTION OF THE DRAWINGS

To better describe and illustrate embodiments and/or examples of the present application, reference may be made to one or more accompanying drawings. No additional details or examples used to describe the accompanying drawings should be considered limiting of the scope of any of the disclosed applications, the presently described embodiments and/or examples, and the presently understood best mode of such applications.
FIG. 1 is a schematic structural diagram of a bare cell of a secondary battery according to one embodiment of the present application;
FIG. 2 is a scanning electron micrograph of a negative electrode plate and a first gel electrolyte membrane in a secondary battery according to one embodiment of the present application;
FIG. 3 is a scanning electron micrograph of a positive electrode plate and a second gel electrolyte membrane in a secondary battery according to one embodiment of the present application;
FIG. 4 is a schematic diagram of a secondary battery according to one embodiment of the present application;
FIG. 5 is an exploded view of the secondary battery according to the embodiment of the present application as shown in FIG. 4; and
FIG. 6 is a schematic diagram of an electric device using a secondary battery as a power source according to one embodiment of the present application.

### Description of the reference numerals:

1. secondary battery; 11. negative electrode plate; 12. first gel electrolyte membrane; 13. separator; 14. second gel electrolyte membrane; 15. positive electrode plate; 16. housing; 17. electrode assembly; 18. cover plate; 111. negative electrode current collector; 112. negative electrode active material layer; 151. positive electrode current collector; 152. positive electrode active material layer; 2. electric device.

### DETAILED DESCRIPTION

Hereinafter, embodiments of the secondary battery and the preparation method therefor, and the electric device according to the present application will be described in detail with reference to the accompanying drawings. However, unnecessarily detailed descriptions may be omitted. For example, detailed descriptions of well-known matters and repetitive descriptions of actually identical structures may be omitted. This is to avoid unnecessary lengthiness of the following descriptions and to facilitate understanding by those skilled in the art. Additionally, the drawings and the following descriptions are provided to enable those skilled in the art to fully understand the present application and are not intended to limit the subject matter recited in the claims.

The "ranges" disclosed in the present application are defined with lower and upper limits. A given range is defined by selecting a lower limit and an upper limit that delineate the boundaries of a particular range. Ranges defined in this manner may include or exclude the end values and can be combined arbitrarily, which means that any lower limit may be combined with any upper limit to form a range. For example, if ranges of 60-120 and 80-110 are listed for a particular parameter, it will be appreciated that ranges of 60-110 and 80-120 are also anticipated. Additionally, if the minimum range values listed are 1 and 2, and the maximum range values listed are 3, 4, and 5, then the following ranges can all be anticipated: 1-3, 1-4, 1-5, 2-3, 2-4, and 2-5. In the present application, unless otherwise specified, the numerical range "a-b" indicates an abbreviated representation of any combination of real numbers between a and b, where both a and b are real numbers. For example, the numerical range "0-5" indicates that all real numbers between "0-5" are listed herein, and "0-5" is merely an abbreviated representation of a combination of these numerical values. Additionally, when stating that a parameter is an integer ≥ 2, it is equivalent to disclosing that the parameter is, for example, an integer of 2, 3, 4, 5, 6, 7, 8, 9, 10, 11, 12, or the like.

Unless otherwise specified, all embodiments and optional embodiments of the present application can be combined with one another to form new technical solutions.

Unless otherwise specified, all technical features and optional technical features of the present application can be combined with one another to form new technical solutions.

Unless otherwise specified, all steps of the present application can be performed sequentially or randomly, preferably sequentially. For example, if the method includes steps (a) and (b), it indicates that the method may include steps (a) and (b) performed sequentially or steps (b) and (a) performed sequentially. For example, if the mentioned method may further include step (c), it indicates that step (c) may be added to the method in any order; for example, the method may include steps (a), (b), and (c), or steps (a), (c), and (b), or steps (c), (a), and (b), or the like.

Unless otherwise specified, the "include", "comprise", and "contain" mentioned in the present application are open-ended or closed-ended. For example, the "include", "comprise", and "contain" may mean that other unlisted components may also be included or comprised or that only the listed components are included or comprised.

Unless otherwise specified, the term "or" in the present application is inclusive. For example, the phrase "A or B" means "A, B, or both A and B". More specifically, any one of the following conditions satisfies the condition "A or B": A is true (or present) and B is false (or absent); A is false (or absent) and B is true (or present); or both A and B are true (or present).

The weight described in the specification of the present application may be µg, mg, g, kg, and other weight units well known in the chemical industry.

At present, as the secondary batteries have achieved great development, higher requirements have also been placed on their cycle performance and energy density. The cycle performance and the energy density of conventional secondary batteries need to be further improved. In view of this, the present application provides a secondary battery, where an electrolyte containing a gel electrolyte membrane is adopted, and a solidification ratio of the electrolyte and a ratio of a thickness of the gel electrolyte membrane to an areal capacity of a negative electrode are controlled, such that the secondary battery not only has good cycle performance, but also has high volumetric energy density.

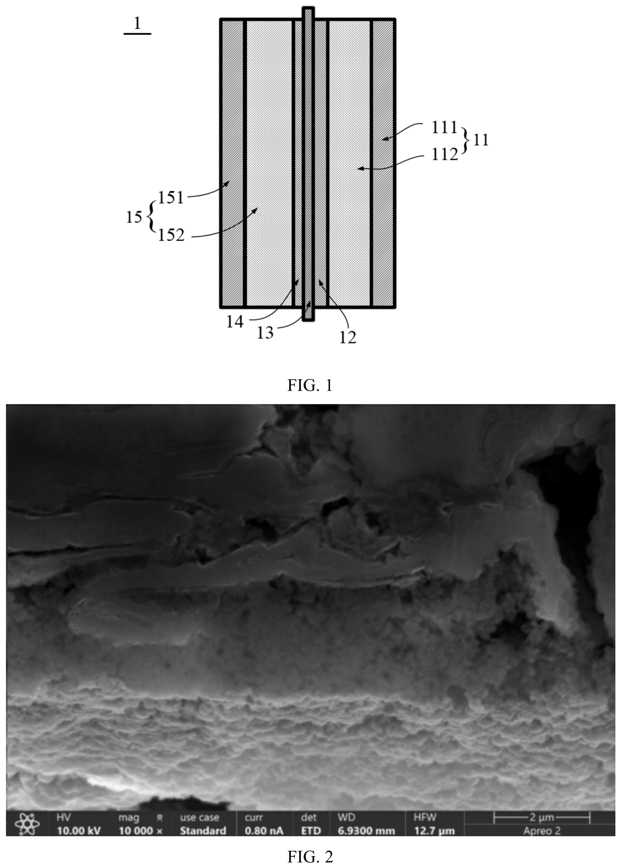

Referring to FIG. 1, a first aspect of the present application provides a secondary battery 1, which includes a negative electrode plate 11, a separator 13, a positive electrode plate 15, and an electrolyte; where the separator 13 is disposed between the positive electrode plate 14 and the negative electrode plate 11; the electrolyte includes an electrolytic solution and a first gel electrolyte membrane 12, where the first gel electrolyte membrane 12 is disposed between the negative electrode plate 11 and the separator 13, a solidification ratio of the electrolyte is 60% to 95%, a thickness of the first gel electrolyte membrane 12 is a µm, an areal capacity of the negative electrode plate 11 is b mAh cm⁻², and a/b is 0.1 to 1.5.

In the conventional secondary battery, since the electrolytic solution has fluidity, the electrolytic solution in the electrode plate will be extruded with the expansion and contraction of the electrode plate during the charging and discharging of the battery, such that the electrolytic solution cannot well enter the electrode plate, resulting in the deterioration of the cycle performance of the secondary battery.

In order to solve the above problems, the electrolyte used in the secondary battery 1 of the present application includes the electrolytic solution and the first gel electrolyte membrane 12, where the first gel electrolyte membrane 12 is disposed between the negative electrode plate 11 and the separator 13, the solidification ratio of the electrolyte is controlled within the range of 60% to 95%, and the ratio a/b of the thickness of the first gel electrolyte membrane 12 to the areal capacity of the negative electrode plate 11 is controlled within the range of 0.1 to 1.5. As the expansion and contraction of the secondary battery 1 during charging and discharging mainly occur on the negative electrode plate 11, the first gel electrolyte membrane 12 is disposed between the negative electrode plate 11 and the separator 13, and the solidification ratio of the electrolyte is controlled within the range of 60% to 95%, such that the electrolyte has a proper amount of electrolytic solution; more electrolytic solution can be kept between the negative electrode plate 11 and the separator 13 by means of the liquid absorption function of the first gel electrolyte membrane 12, and it can be ensured that enough electrolytic solution enters the negative electrode plate 11 during the expansion and contraction of the negative electrode plate 11, thereby improving the cycle performance of the secondary battery 1.

In addition, the amount of the electrolytic solution required in the negative electrode plate 11 is proportional to the areal capacity of the negative electrode plate 11, and the thickness of the first gel electrolyte membrane 12 is positively correlated with the amount of the electrolytic solution absorbed thereby. In the present application, the ratio a/b of the thickness of the first gel electrolyte membrane 12 to the areal capacity of the negative electrode plate 11 is controlled within the range of 0.1 to 1.5; in an aspect, it can be ensured that enough electrolytic solution enters the negative electrode plate 11 during the expansion and contraction of the negative electrode plate 11, thereby ensuring the cycle performance of the secondary battery 1; in another aspect, the first gel electrolyte membrane 12 is not too thick, and thus the secondary battery 1 can have high rate capability and volumetric energy density. As the ionic conductivity of the gel electrolyte membrane is lower than that of the electrolytic solution, if the first gel electrolyte membrane 12 is too thick, not only the rate capability of the secondary battery 1 is reduced, but also the volumetric energy density of the secondary battery 1 is reduced.

Referring to FIG. 1, the negative electrode plate 11 of the secondary battery 1 includes a negative electrode current collector 111 and a negative electrode active material layer 112 disposed on the negative electrode current collector 111, the negative electrode active material layer 112 being disposed between the negative electrode current collector 111 and the separator 13; the positive electrode plate 15 includes a positive electrode current collector 151 and a positive electrode active material layer 152 disposed on the positive electrode current collector 151, the positive electrode active material layer 152 being disposed between the positive electrode current collector 151 and the separator 13. FIG. 2 is a scanning electron micrograph of a negative electrode plate 11 and a first gel electrolyte membrane 12 in a secondary battery 1 according to one embodiment of the present application. In FIG. 2, the upper layer is the negative electrode plate 11, and the lower layer is the first gel electrolyte membrane 12.

It should be noted that the electrolytic solution refers to a liquid electrolyte that can flow inside the bare cell. The solidification ratio of the electrolyte refers to the ratio of the mass of the gel-state electrolyte to the total mass of the electrolyte. The areal capacity refers to a discharge capacity per unit area of the electrode plate.

It can be understood that the solidification ratio of the electrolyte in the secondary battery 1 of the present application may be, but is not limited to, 60%, 62%, 65%, 68%, 70%, 72%, 75%, 78%, 80%, 82%, 85%, 88%, 90%, 92%, and 95%; the ratio a/b of the thickness of the first gel electrolyte membrane 12 to the areal capacity of the negative electrode plate 11 may be, but is not limited to, 0.1, 0.2, 0.3, 0.4, 0.5, 0.6, 0.7, 0.8, 0.9, 1.0, 1.1, 1.2, 1.3, 1.4, and 1.5.

In some embodiments, the ratio a/b of the thickness of the first gel electrolyte membrane 12 to the areal capacity of the negative electrode plate 11 is 0.15 to 1.2. In this way, it can be better ensured that enough electrolytic solution enters the negative electrode plate 11 during the expansion and contraction of the negative electrode plate 11, thereby ensuring the cycle performance of the secondary battery 1; meanwhile, the excessive thickness of the first gel electrolyte membrane 12 is better avoided, thereby enabling the secondary battery 1 to have a high volumetric energy density.

In some embodiments, the ratio a/b of the thickness of the first gel electrolyte membrane 12 to the areal capacity of the negative electrode plate 11 is 0.28 to 0.95. In this way, it can be better ensured that enough electrolytic solution enters the negative electrode plate 11 during the expansion and contraction of the negative electrode plate 11, thereby ensuring the cycle performance of the secondary battery 1; meanwhile, the excessive thickness of the first gel electrolyte membrane 12 is better avoided, thereby further enabling the secondary battery 1 to have a high volumetric energy density.

In some embodiments, the solidification ratio of the electrolyte is 70% to 90%. Controlling the solidification ratio of the electrolyte within the range of 70% to 90% can further ensure that the electrolyte has a suitable amount of electrolytic solution, and better ensure that enough electrolytic solution is kept between the negative electrode plate 11 and the separator 13, thereby ensuring that enough electrolytic solution enters the negative electrode plate 11 during the expansion and contraction of the negative electrode plate 11, which is beneficial to improving the cycle performance of the secondary battery 1.

In some embodiments, the thickness of the first gel electrolyte membrane 12 is 1 µm to 10 µm, i.e., a is 1 to 10. It can be understood that the thickness of the first gel electrolyte membrane 12 can be appropriately adjusted within the scope of the present application according to the areal capacity of the negative electrode plate 11. Generally, the thickness of the first gel electrolyte membrane 12 is controlled within the range of 1 µm to 10 µm, such that the secondary battery 1 can have good cycle performance and high volumetric energy density.

It can be understood that the thickness of the first gel electrolyte membrane 12 may be, but is not limited to, 1 µm, 1.5 µm, 2 µm, 2.5 µm, 3 µm, 3.5 µm, 4 µm, 4.5 µm, 5 µm, 5.5 µm, 6 µm, 6.5 µm, 7 µm, 7.5 µm, 8 µm, 8.5 µm, 9 µm, 9.5 µm, and 10 µm.

In some embodiments, the thickness of the first gel electrolyte membrane 12 is 2 µm to 4 µm, i.e., a is 2 to 4. In this way, this is more conducive to improving the cycle performance and the volumetric energy density of the secondary battery 1.

In some embodiments, the areal capacity of the negative electrode plate 11 is 3 mAh cm⁻² to 10 mAh cm⁻², i.e., b is 3 to 10. The areal capacity of the negative electrode plate 11 is positively correlated with the battery capacity, and the technical solutions of the present application are applicable to a secondary battery 1 having a relatively high capacity.

It can be understood that the areal capacity of the negative electrode plate 11 may be, but is not limited to, 3 mAh cm⁻², 3.5 mAh cm⁻², 4 mAh cm⁻², 4.5 mAh cm⁻², 5 mAh cm⁻², 5.5 mAh cm⁻², 6 mAh cm⁻², 6.5 mAh cm⁻², 7 mAh cm⁻², 7.5 mAh cm⁻², 8 mAh cm⁻², 8.5 mAh cm⁻², 9 mAh cm⁻², 9.5 mAh cm⁻², and 10 mAh cm⁻².

In some embodiments, the areal capacity of the negative electrode plate 11 is 4.2 mAh cm⁻² to 7 mAh cm⁻², i.e., b is 4.2 to 7.

In some embodiments, the electrolyte further includes a second gel electrolyte membrane 14, the second gel electrolyte membrane 14 being disposed between the positive electrode plate 15 and the separator 13. During the charging and discharging process of the secondary battery 1, although the expansion and contraction of the electrode plate mainly occur on the negative electrode plate 11, there is also a certain expansion and contraction process in the positive electrode plate 15, and there may also be a problem that the electrolytic solution in the positive electrode plate 15 is extruded, which affects the cycle performance of the secondary battery 1. In the present application, the second gel electrolyte membrane 14 is disposed between the positive electrode plate 15 and the separator 13, and a part of the electrolytic solution of the electrolyte can be kept between the positive electrode plate 15 and the separator 13 by means of the liquid absorption function of the second gel electrolyte membrane 14, so as to ensure that enough electrolytic solution enters the positive electrode plate 15 during the expansion and contraction of the positive electrode plate 15, thereby further improving the cycle performance of the secondary battery 1.

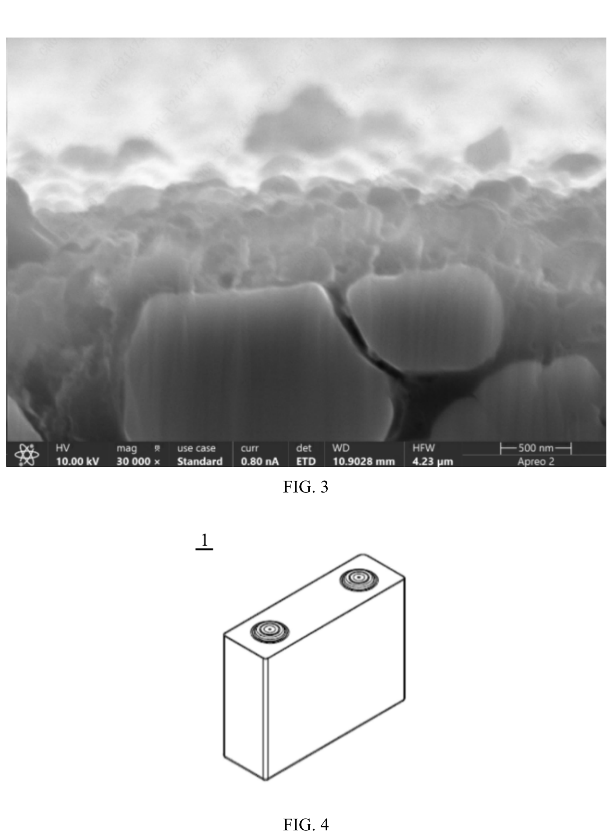

FIG. 3 is a scanning electron microscope of a positive electrode plate 15 and a second gel electrolyte membrane 14 in a secondary battery 1 according to one embodiment of the present application. In FIG. 3, the upper layer is the second gel electrolyte membrane 14, and the lower layer is the positive electrode plate 15.

In some embodiments, the thickness of the second gel electrolyte membrane 14 is c µm, and the thickness of the second gel electrolyte membrane 14 is smaller than the thickness of the first gel electrolyte membrane 12, i.e., c < a. Since the expansion and contraction of the electrode plate mainly occur on the negative electrode plate 11 during the charging and discharging of the secondary battery 1, the expansion and contraction of the positive electrode plate 15 are small; by setting the thickness of the second gel electrolyte membrane 14 to be less than the thickness of the first gel electrolyte membrane 12, the thickness of the second gel electrolyte membrane 14 can be made not too large while improving the cycle performance of the secondary battery 1, thereby better improving the volumetric energy density of the secondary battery 1.

In some embodiments, the thickness of the second gel electrolyte membrane 14 is 0.1 µm to 2 µm, i.e., c is 0.1 to 2. In this way, it can be ensured that enough electrolytic solution enters the positive electrode plate 15 during the expansion and contraction of the positive electrode plate 15, thereby further improving the cycle performance of the secondary battery 1 and further improving the volumetric energy density of the secondary battery 1.

It can be understood that the thickness of the second gel electrolyte membrane 14 may be, but is not limited to, 0.1 µm, 0.2 µm, 0.3 µm, 0.4 µm, 0.5 µm, 0.6 µm, 0.7 µm, 0.8 µm, 0.9 µm, 1.0 µm, 1.1 µm, 1.2 µm, 1.3 µm, 1.4 µm, 1.5 µm, 1.6 µm, 1.7 µm, 1.8 µm, 1.9 µm, and 2 µm.

In some embodiments, the electrolyte further includes a gel electrolyte filled in internal pores of the positive electrode plate 15 and/or the negative electrode plate 11. The gel electrolyte in the internal pores of the positive electrode plate 15 and the negative electrode plate 11 may be a gel electrolyte formed by injecting electrolyte raw materials into the cell, introducing a polymer monomer into the pores between the active material layer materials of the electrode plate and the pores of the materials themselves, and then performing in-situ polymerization. By filling the gel electrolyte in the internal pores of the positive electrode plate 15 and the negative electrode plate 11, the volume expansion of the electrode plate during charging and discharging can be effectively buffered, and the liquid retention amount of the electrolytic solution inside the electrode plate can be further improved, thereby further improving the cycle performance of the secondary battery 1.

In some embodiments, the active material of the negative electrode plate 11 contains a silicon-based material. The technical solutions of the present application are applicable to a secondary battery 1 in which the negative electrode does not contain a silicon-based material, and are also applicable to a secondary battery 1 in which the negative electrode contains a silicon-based material. The energy density of the secondary battery 1 can be improved by using the secondary battery 1 in which the negative electrode contains a silicon-based material. It can be understood that since the content of the silicon-based material of the negative electrode is positively correlated with the areal capacity of the negative electrode, the thickness of the first gel electrolyte membrane 12 can be appropriately adjusted within the scope of the present application according to the content of the silicon-based material of the negative electrode.

In some embodiments, a mass ratio of the silicon-based material in the active material of the negative electrode plate 11 is ≥ 10%. It can be understood that the mass proportion of the silicon-based material in the active material may be, but is not limited to, 10%, 20%, 30%, 40%, 50%, 60%, 70%, 80%, and 90%. In this way, the energy density of the secondary battery 1 can be improved.

In some embodiments, the silicon-based material may be selected from one or more of elemental silicon, silicon-oxygen compounds, silicon-carbon composites, silicon-nitrogen composites, and silicon alloys.

In a second aspect of the present application, provided is a method for preparing the secondary battery 1 according to the first aspect of the present application, which includes:
providing a negative electrode plate 11, and forming a metallic lithium layer on a surface of the negative electrode plate 11;
stacking the negative electrode plate 11, a separator 13, and a positive electrode plate 15 in sequence to form a bare cell, where the metallic lithium layer is located between the negative electrode plate 11 and the separator 13;
placing the bare cell in a shell, injecting electrolyte raw materials, and dissolving the metallic lithium layer, where the electrolyte raw materials include an electrolyte salt, a solvent, a polymer monomer, and an initiator; and
partially solidifying the electrolyte raw materials in the bare cell to form an electrolyte, and forming a first gel electrolyte membrane 12 at a position where the metallic lithium layer is not dissolved.

In the above method for preparing the secondary battery 1, the metallic lithium layer is formed on the surface of the negative electrode plate 11, the metallic lithium layer is located between the negative electrode plate 11 and the separator 13 when a bare cell is assembled, the metallic lithium layer is dissolved and spontaneously embedded into the negative electrode active material after the electrolyte raw materials are injected, and the first gel electrolyte membrane 12 is formed at the position where the metallic lithium layer is not dissolved after the electrolyte raw materials are partially solidification. According to the above preparation method, the thickness of the first gel electrolyte membrane 12 can be adjusted by controlling the thickness of the metallic lithium layer preset on the surface of the negative electrode plate 11, thereby preparing the secondary battery 1 having the first gel electrolyte membrane 12 with a certain thickness between the negative electrode plate 11 and the separator 13 of the present application.

In the above preparation method, the thickness of the metallic lithium layer on the surface of the negative electrode plate 11 may be adjusted by calculating the loading amount of the negative electrode plate 11 and controlling the coating pressure of the metallic lithium layer on the negative electrode plate 11. Further, the thickness of the metallic lithium layer plays a role in adjusting the thickness of the first gel electrolyte membrane 12.

In addition, the second gel electrolyte membrane 14 is also formed in the gap between the positive electrode plate and the separator at the same time as the first gel electrolyte membrane 12 is formed. The thickness of the second gel electrolyte membrane 14 may be determined based on the polyvinylidene difluoride microspheres on the separator. By controlling the coating amount of the polyvinylidene difluoride microspheres on the surface of the separator, the spacing between the positive electrode plate and the separator may be 0.1 µm to 2 µm, such that the second gel electrolyte membrane 14 is formed within the spacing.

In some embodiments, the metal lithium is first melted, and the metal lithium in a melted state coats the surface of the negative electrode plate 11. After the metal lithium is cooled and solidified, a metallic lithium layer is formed on the surface of the negative electrode plate 11. It can be understood that the present application is not limited to the foregoing specific method, and another conventional method in the art may be further adopted to form the metallic lithium layer on the surface of the negative electrode plate 11.

In some embodiments, the polymer monomer in the electrolyte raw materials includes one or more of a carbonate monomer, a sulfone monomer, an isocyanate monomer, an amide monomer, a nitrile monomer, a fluorinated monomer, an ether compound monomer, an ether segment-containing oligomer, and a siloxane.

In some embodiments, the initiator in the electrolyte raw materials includes one or more of an azo initiator, a peroxide initiator, an anionic/cationic initiator, an organometallic compound initiator, an amine catalyst initiator, and an organophosphorus initiator.

By using the polymer monomer and the initiator, in-situ polymerization and solidification may be performed inside the bare cell to form a gel-state electrolyte. The gel-state electrolyte includes the first gel electrolyte membrane 12, the second gel electrolyte membrane 14, and the gel electrolyte filled in internal pores of the positive electrode plate 15 and the negative electrode plate 11.

In some embodiments, the electrolyte salt in the electrolyte raw materials includes one or more of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluoro(oxalato)borate, lithium bis(oxalato)borate, lithium difluorophosphate, lithium difluorobis(oxalato)phosphate, and lithium tetrafluoro(oxalato)phosphate.

In some embodiments, the solvent in the electrolyte raw materials includes one or more of fluoroethylene carbonate, ethylene carbonate, propylene carbonate, ethyl methyl carbonate, diethyl carbonate, dimethyl carbonate, dipropyl carbonate, methyl propyl carbonate, ethyl propyl carbonate, butylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

It can be understood that by adjusting the ratio of the electrolyte salt, the solvent, the polymer monomer and the initiator in the electrolyte raw materials, the relative content of the gel-state electrolyte and the electrolytic solution in the electrolyte can be controlled, thereby adjusting the solidification ratio of the electrolyte.

In a third aspect of the present application, provided is an electric device, which includes the secondary battery according to the first aspect of the present application.

Hereinafter, a secondary battery and an electric device according to the present application will be described with reference to FIGs. 4 to 6 as appropriate.

The components, the types of materials, or the contents of the battery mentioned are applicable to both the lithium-ion secondary battery and the sodium-ion secondary battery, unless otherwise specified.

In one embodiment of the present application, provided is a secondary battery.

Typically, a secondary battery includes a positive electrode plate, a negative electrode plate, an electrolyte, and a separator. During the charging and discharging process of the battery, active ions are intercalated and deintercalated back and forth between the positive electrode plate and the negative electrode plate. The electrolyte conducts ions between the positive electrode plate and the negative electrode plate. The separator is disposed between the positive electrode plate and the negative electrode plate to primarily prevent the positive and negative electrodes from short-circuiting, while allowing the passage of ions.

### [Positive Electrode Plate]

The positive electrode plate includes a positive electrode current collector and a positive electrode film layer disposed on at least one surface of the positive electrode current collector.

As an example, the positive electrode current collector has two surfaces opposite to each other in its own thickness direction, and the positive electrode film layer is disposed on any one or both of the two opposite surfaces of the positive electrode current collector.

In some embodiments, a metal foil or a composite current collector may be used as the positive electrode current collector. For example, as the metal foil, an aluminum foil may be used. The composite current collector may include a polymer material substrate and a metal layer formed on at least one surface of the polymer material substrate. The composite current collector may be formed by forming a metal material on a polymer material substrate. The metal material includes, but is not limited to, aluminum, an aluminum alloy, nickel, a nickel alloy, titanium, a titanium alloy, silver, a silver alloy, and the like. Polymer material substrate (such as polypropylene (PP), polyethylene terephthalate (PET), polybutylene terephthalate (PBT), polystyrene (PS), polyethylene (PE), and other substrates)

In some embodiments, a positive electrode active material for use in batteries known in the art may be included in the positive electrode active material.

As an example, a positive electrode active material for a lithium-ion secondary battery may include at least one of the following materials: a lithium-containing phosphate with an olivine structure, a lithium transition metal oxide, and their respective modified compounds. However, the present application is not limited to these materials, and other traditional materials that can be used as positive electrode active materials for batteries may also be used. These positive electrode active materials may be used alone or in combination of two or more. Examples of the lithium transition metal oxide may include, but are not limited to, at least one of a lithium cobalt oxide (such as LiCoO₂), a lithium nickel oxide (such as LiNiO₂), a lithium manganese oxide (such as LiMnO₂ or LiMn₂O₄), a lithium nickel cobalt oxide, a lithium manganese cobalt oxide, a lithium nickel manganese oxide, a lithium nickel cobalt manganese oxide (such as LiNi_{1/3}Co_{1/3}Mn_{1/3}O₂ (also referred to as NCM₃₃₃), LiNi_{0.5}C_{0.2}Mn_{0.3}O₂ (also referred to as NCM₅₂₃), LiNi_{0.5}Co_{0.25}Mn_{0.25}O₂ (also referred to as NCM₂₁₁), LiNi_{0.6}Co_{0.2}Mn_{0.2}O₂ (also referred to as NCM₆₂₂), LiNi_{0.8}Co_{0.1}Mn_{0.1}O₂ (also referred to as NCM₈₁₁)), a lithium nickel cobalt aluminum oxide (such as LiNi_{0.85}Co_{0.15}Al_{0.05}O₂), and modified compounds thereof. Examples of the lithium-containing phosphate with an olivine structure may include, but are not limited to, at least one of lithium iron phosphate (such as LiFePO₄ (also referred to as LFP)), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon.

As an example, a positive electrode active material for a sodium-ion secondary battery may include at least one of the following materials: at least one of a sodium transition metal oxide, a polyanionic compound, and a Prussian blue compound. However, the present application is not limited to these materials, and other traditional materials known in the art that can be used as positive electrode active materials for sodium-ion batteries may also be used.

As an optional technical solution of the present application, in the sodium transition metal oxide, the transition metal may be at least one of Mn, Fe, Ni, Co, Cr, Cu, Ti, Zn, V, Zr, and Ce. The sodium transition metal oxide is, for example, NaₓMO₂, where M is one or more of Ti, V, Mn, Co, Ni, Fe, Cr, and Cu, and 0 < x ≤ 1.

As an optional technical solution of the present application, the polyanionic compound may be a class of compounds having sodium ions, transition metal ions, and tetrahedral (YO₄)ⁿ⁻ anion units. The transition metal may be at least one of Mn, Fe, Ni, Co, Cr, Cu, Ti, Zn, V, Zr, and Ce; Y may be at least one of P, S, and Si; and n represents the valence state of (YO₄)ⁿ⁻.

The polyanionic compound may also be a class of compounds having sodium ions, transition metal ions, tetrahedral (YO₄)ⁿ⁻ anion units, and halogen anions. The transition metal may be at least one of Mn, Fe, Ni, Co, Cr, Cu, Ti, Zn, V, Zr, and Ce; Y may be at least one of P, S, and Si, and n represents the valence state of (YO₄)ⁿ⁻; and the halogen may be at least one of F, Cl, and Br.

The polyanionic compound may also be a class of compounds having sodium ions, tetrahedral (YO₄)ⁿ⁻ anion units, polyhedral units (ZO_{y})^{m+}, and optionally halogen anions. Y may be at least one of P, S, and Si, and n represents the valence state of (YO₄)ⁿ⁻; Z represents a transition metal, which may be at least one of Mn, Fe, Ni, Co, Cr, Cu, Ti, Zn, V, Zr, and Ce, and m represents the valence state of (ZO_{y})^{m+}; and the halogen may be at least one of F, Cl, and Br.

The polyanionic compound is, for example, NaFePO₄, Na₃V₂(PO4)₃ (sodium vanadium phosphate, NVP), Na₄Fe₃(PO₄)₂(P₂O₇), NaM'PO4F (M' is one or more of V, Fe, Mn and Ni), and Na₃(VO_{y})₂(PO₄)₂F_{3-2y} (0 ≤ y ≤ 1).

The Prussian blue compound may be a class of compounds having sodium ions, transition metal ions, and cyanide ions (CN⁻). The transition metal may be at least one of Mn, Fe, Ni, Co, Cr, Cu, Ti, Zn, V, Zr, and Ce. The Prussian blue compound is, for example, NaₐMe_{b}Me'_{c}(CN)₆, where Me and Me' are each independently at least one of Ni, Cu, Fe, Mn, Co, and Zn, 0 < a ≤ 2, 0 < b < 1, and 0 < c < 1.

A weight ratio of the positive electrode active material in the positive electrode film layer is 80 wt% to 100 wt%, based on a total weight of the positive electrode film layer.

In some embodiments, the positive electrode film layer further optionally includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylic resin. A weight ratio of the binder in the positive electrode film layer is 0 wt% to 20 wt%, based on the total weight of the positive electrode film layer.

In some embodiments, the positive electrode film layer further optionally includes a conductive agent. As an example, the conductive agent may include at least one of superconducting carbon, acetylene black, carbon black, Ketjen black, a carbon dot, a carbon nanotube, graphene, and a carbon nanofiber. A weight ratio of the conductive agent in the positive electrode film layer is 0 wt% to 20 wt%, based on the total weight of the positive electrode film layer.

In some embodiments, the positive electrode plate may be prepared as follows: The components for preparing the positive electrode plate, such as the positive electrode active material, the conductive agent, the binder, and any other components, are dispersed in a solvent (e.g., N-methylpyrrolidone) to form a positive electrode slurry, where a solid content of the positive electrode slurry is 40 wt% to 80 wt%, and a viscosity of the positive electrode slurry at room temperature is adjusted to 5000 mPa·s to 25000 mPa·s; and the positive electrode slurry coats the surface of the positive electrode current collector, dried, and then cold-pressed by a cold rolling mill to form the positive electrode plate; theareal loading of the positive electrode powder is 150 mg/m² to 350 mg/m², and the compaction density of the positive electrode plate is 3.0 g/cm³ to 3.6 g/cm³, and optionally 3.3 g/cm³ to 3.5 g/cm³.

The calculation formula of the compaction density is as follows:

Compaction density = coating areal density/(thickness of electrode plate after extrusion - thickness of current collector).

The mass M of the positive electrode active substance in the positive electrode film per unit area may be measured by using a standard balance.

The thickness T of the positive electrode film may be measured by using a micrometer, for example, may be measured by using a micrometer with a model of Mitutoyo 293-100 and a precision of 0.1 µm. It should be noted that the thickness of the positive electrode film in the present application refers to a thickness of a positive electrode film in a positive electrode plate that is cold-pressed and compacted and is configured to assemble a battery.

### [Negative Electrode Plate]

A negative electrode plate includes a negative electrode current collector and a negative electrode film layer disposed on at least one surface of the negative electrode current collector, and the negative electrode film layer includes a negative electrode active material.

As an example, the negative electrode current collector has two surfaces opposite to each other in its own thickness direction, and the negative electrode film layer is disposed on any one or both of the two opposite surfaces of the negative electrode current collector.

In some embodiments, a metal foil or a composite current collector may be used as the negative electrode current collector. For example, as the metal foil, a copper foil may be used. The composite current collector may include a polymer material substrate and a metal layer formed on at least one surface of the polymer material substrate. The composite current collector may be formed by forming a metal material on a polymer material substrate. The metal material includes, but is not limited to, copper, a copper alloy, nickel, a nickel alloy, titanium, a titanium alloy, silver, a silver alloy, and the like. The polymer material substrate includes, but is not limited to, polypropylene (PP), polyethylene terephthalate (PET), polybutylene terephthalate (PBT), polystyrene (PS), polyethylene (PE), and the like.

In some embodiments, a negative electrode active material for use in batteries known in the art may be used as the negative electrode active material.

As an example, the negative electrode active material for a lithium-ion secondary battery may include at least one of the following materials: artificial graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, the present application is not limited to these materials, and other traditional materials that can be used as negative electrode active materials for batteries may also be used. These negative electrode active materials may be used alone or in combination of two or more.

As an example, the negative electrode active material of the sodium-ion secondary battery is typically a hard carbon material, a two-dimensional metal carbide, or a nitride. It is preferable that the negative electrode active material for the sodium-ion secondary battery is usually a hard carbon material.

A weight ratio of the negative electrode active material in the negative electrode film layer is 70 wt% to 100 wt%, based on a total weight of the negative electrode film layer.

In some embodiments, the negative electrode film layer further optionally includes a binder. The binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS). A weight ratio of the binder in the negative electrode film layer is 0 wt% to 30 wt%, based on the total weight of the negative electrode film layer.

In some embodiments, the negative electrode film layer further optionally includes a conductive agent. The conductive agent may be selected from at least one of superconducting carbon, acetylene black, carbon black, Ketjen black, a carbon dot, a carbon nanotube, graphene, and a carbon nanofiber. A weight ratio of the conductive agent in the negative electrode film layer is 0 wt% to 20 wt%, based on the total weight of the negative electrode film layer.

In some embodiments, the negative electrode film layer further optionally includes another auxiliary agent, such as a thickener (e.g., sodium carboxymethylcellulose (CMC-Na)). A weight ratio of the another auxiliary agent in the negative electrode film layer is 0 wt% to 15 wt%, based on the total weight of the negative electrode film layer.

In some embodiments, the negative electrode plate may be prepared as follows: The components for preparing the negative electrode plate, such as the negative electrode active material, the conductive agent, the binder, and any other components, are dispersed in a solvent (e.g., deionized water) to form a negative electrode slurry, where a solid content of the negative electrode slurry is 30 wt% to 70 wt%, and a viscosity of the negative electrode slurry at room temperature is adjusted to 2000 mPa·s to 10000 mPa·s; and the obtained negative electrode slurry coats the negative electrode current collector, and is subjected to a drying process, and cold pressing, such as roller cold calendering, to obtain the negative electrode plate. Theareal loading of the negative electrode powder is 75 mg/m² to 220 mg/m², and the compaction density of the negative electrode plate is 1.2 g/m³ to 2.0 g/m³.

The mass M of the negative electrode active material in the negative electrode film per unit area may be measured by using a standard balance.

The thickness T of the negative electrode film may be measured by using a micrometer, for example, may be measured by using a micrometer with a model of Mitutoyo 293-100 and a precision of 0.1 µm. It should be noted that the thickness of the negative electrode film in the present application refers to a thickness of a negative electrode film in a negative electrode plate that is cold-pressed and compacted and is configured to assemble a battery.

### [Electrolyte]

The electrolyte conducts ions between the positive electrode plate and the negative electrode plate. The electrolyte of the present application includes a gel-state electrolyte and an electrolytic solution.

In some embodiments, the electrolyte raw materials include an electrolyte salt, a solvent, a polymer monomer, and an initiator.

In some embodiments, the electrolyte salt for a lithium-ion secondary battery may be selected from one or more of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalato)borate (LiBOB), lithium difluorophosphate (LiPO₂F₂), lithium difluorobis(oxalato)phosphate (LiDFOP), and lithium tetrafluoro(oxalato)phosphate (LiTFOP).

The electrolyte salt for a sodium-ion secondary battery may be selected from one or more of sodium hexafluorophosphate, sodium bis(fluorosulfonyl)imide, sodium bis(trifluoromethanesulfonyl)imide, sodium trifluoromethanesulfonate, sodium tetrafluoroborate, sodium difluorophosphate, sodium perchlorate, and sodium chloride.

In some embodiments, the solvent may be selected from one or more of fluoroethylene carbonate (FEC), ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), ethyl methyl sulfone (EMS), and diethyl sulfone (ESE).

In some embodiments, the polymer monomer includes one or more of a carbonate monomer, a sulfone monomer, an isocyanate monomer, an amide monomer, a nitrile monomer, a fluorinated monomer, an ether compound monomer, an ether segment-containing oligomer, and a siloxane.

In some embodiments, the initiator includes one or more of an azo initiator, a peroxide initiator, an anionic/cationic initiator, an organometallic compound initiator, an amine catalyst initiator, and an organophosphorus initiator.

In some embodiments, the electrolytic solution further optionally includes an additive. The additive may include a negative electrode film-forming additive and a positive electrode film-forming additive, and may further include an additive capable of improving certain properties of the battery, such as an additive for improving the overcharge performance of the battery, and an additive for improving the high- or low-temperature performance of the battery.

### [Separator]

In some embodiments, the secondary battery further includes a separator. The present application does not particularly limit the type of the separator, and any porous-structure separator known to have good chemical stability and mechanical stability may be selected and used.

In some embodiments, the separator may be made of a material selected from at least one of glass fiber, non-woven fabric, polyethylene, polypropylene, and polyvinylidene difluoride. The separator may be a single-layer film or a multi-layer composite film, and there is no particular limitation on this. When the separator is a multi-layer composite film, the materials of the layers may be the same or different, and there is no particular limitation on this.

In some embodiments, the thickness of the separator is 6 µm to 40 µm, and optionally 12 µm to 20 µm.

In some embodiments, the positive electrode plate, the negative electrode plate, and the separator may be manufactured into an electrode assembly through a winding process or a stacking process.

In some embodiments, the secondary battery may include an outer packaging. The outer packaging may be configured for packaging the electrode assembly and electrolyte described above.

In some embodiments, the outer packaging of the secondary battery may be a hard shell, such as a hard plastic shell, an aluminum shell, or a steel shell. The outer packaging of the secondary battery may also be a soft pack, such as a pouch-type soft pack. The soft pack may be made of plastic, and examples of the plastic may include polypropylene, polybutylene terephthalate, polybutylene succinate, and the like.

The present application does not particularly limit the shape of the secondary battery, and it may have a cylindrical shape, a prismatic shape, or any other shape. For example, FIG. 4 shows a secondary battery 1 having a prismatic structure as one example.

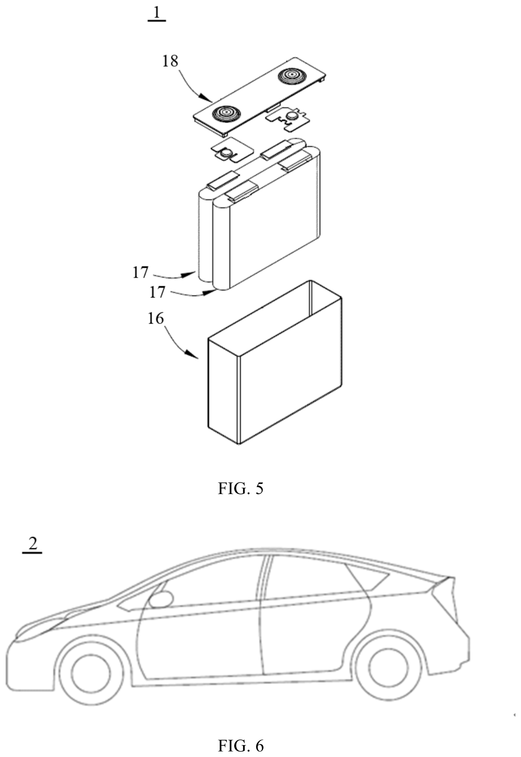

In some embodiments, referring to FIG. 5, the outer packaging may include a housing 16 and a cover plate 18. The housing 16 may include a bottom plate and a side plate connected to the bottom plate, and the bottom plate and the side plate define, in an enclosing manner, an accommodating cavity. The housing 16 is provided with an opening communicating with the accommodating cavity, and the cover plate 18 is capable of lidding the opening to close the accommodating cavity. The positive electrode plate, the negative electrode plate, and the separator may be subjected to a winding process or a stacking process to form an electrode assembly 17. The electrode assembly 17 is packaged in the accommodating cavity. The electrolytic solution is infiltrated into the electrode assembly 17. The number of the electrode assembly 17 included in the secondary battery 1 may be one or more, and those skilled in the art can select the number according to specific and actual needs.

In some embodiments, the secondary battery 1 may be assembled into a battery module. The number of secondary batteries 1 included in the battery module may be one or more, and the specific number may be selected by those skilled in the art based on the use and capacity of the battery module.

In the battery module, a plurality of secondary batteries 1 may be disposed in sequence along a length direction of the battery module. Certainly, the arrangement may also be in any other manner. Further, the plurality of secondary batteries 1 may be fixed by fasteners.

Optionally, the battery module may further include a shell having an accommodating space in which the plurality of secondary batteries 1 are accommodated.

In some embodiments, the battery module described above may also be assembled into a battery pack. The number of battery modules included in the battery pack may be one or more, and the specific number may be selected by those skilled in the art based on the use and capacity of the battery pack.

The battery pack may include a battery case and a plurality of battery modules disposed in the battery case. The battery case includes an upper case body and a lower case body. The upper case body is capable of lidding the lower case body to form a closed space for accommodating the battery modules. The plurality of battery modules may be arranged in any manner in the battery case.

In addition, the present application further provides an electric device. The electric device includes at least one of the secondary battery, the battery module, or the battery pack according to the present application. The secondary battery, the battery module, or the battery pack may be used as a power source for the electric device, and they may also be used as an energy storage unit for the electric device. The electric device may include, but is not limited to, a mobile device (e.g., a mobile phone or a laptop computer), an electric vehicle (e.g., a pure electric vehicle, a hybrid electric vehicle, a plug-in hybrid electric vehicle, an electric bicycle, an electric scooter, an electric golf cart, or an electric truck), an electric train, ship, or satellite, an energy storage system, or the like.

As the electric device, a secondary battery, a battery module, or a battery pack may be selected based on its use requirements.

FIG. 6 shows an electric device 2 as one example. The electric device 2 is a pure electric vehicle, a hybrid electric vehicle, a plug-in hybrid electric vehicle, or the like. To meet the requirements of the electric device 2 for high power and high energy density of the secondary battery 1, the battery pack or the battery module may be used.

As another example, the device may be a mobile phone, a tablet computer, a laptop computer, or the like. The device is generally required to be light and thin, and a secondary battery can thus be used as a power source.

### The following are some examples.

In order to make the technical problems, the technical solutions and the beneficial effects of the present application more apparent, the present application is further described in detail below with reference to the examples and the accompanying drawings. Apparently, the described examples are merely some examples of the present application, rather than all of the examples. The following description of at least one exemplary example is merely illustrative in nature and is in no way intended to limit the present application and application thereof. Based on the examples in the present application, all other examples obtained by those of ordinary skill in the art without creative work shall fall within the protection scope of the present application.

The examples without techniques or conditions specified therein are implemented according to techniques or conditions described in the literature in the art or according to product instructions. Reagents or instruments used herein without specified manufacturers are all commercially available conventional products.

### I. Examples

### Example 1:

### 1) Preparation of positive electrode plate

A positive electrode active material LiNi_{0.8}Co_{0.1}Mn_{0.1}O₂, conductive carbon black SP, and a binder PVDF were dispersed in a solvent NMP at a weight ratio of 98:1:1 and uniformly mixed to obtain a positive electrode slurry; and the positive electrode slurry uniformly coated a positive electrode current collector aluminum foil, and dried and cold-pressed to obtain a positive electrode plate, with a coating amount per unit area of 0.3 g/1540.25 mm².

### 2) Preparation of negative electrode plate

A negative electrode active material graphite, a negative electrode active material silicon monoxide, a conductive agent acetylene black, a binder SBR, and a dispersant CMC were dispersed in deionized water at a mass ratio of 77:25:1:1:1 to obtain a negative electrode slurry; and the obtained negative electrode slurry coated a copper foil, dried, cold-pressed and cut to obtain a negative electrode plate, with a coating amount per unit area of 0.12 g/1540.25 mm² and a negative electrode areal capacity b of 4.2 mAh/cm².

### 3) Separator

A PE separator was used, both surfaces of which were coated with an aluminum oxide coating with a thickness of 1 µm and polyvinylidene difluoride microspheres with a coating amount of 1 mg/1540.25 mm².

### 4) Preparation of metallic lithium layer

The surface of the negative electrode plate was coated with a metallic lithium layer, and the thickness of the metallic lithium layer was determined based on the thickness of the first gel electrolyte membrane required to be prepared.

### 5) Assembly of battery

The positive electrode plate, the separator, and the negative electrode plate were sequentially stacked and wound to form a bare cell. The metallic lithium layer in the bare cell was located between the negative electrode plate and the separator. The bare cell was placed in the shell, and electrolyte raw materials were injected. The composition of the electrolyte raw materials includes, in parts by weight, 10 parts of polyethylene glycol acrylate, 10 parts of fluoroethylene carbonate, 0.2 parts of azobisisobutyronitrile serving as an initiator, 35 parts of dimethyl carbonate, and 35 parts of ethylene carbonate. The above components were mixed uniformly, and then 10 parts of lithium hexafluorophosphate (LiPF₆) were added thereto until the lithium salt was fully dissolved. The polymer monomer in the electrolyte raw materials was in-situ polymerized and solidified to form an electrolyte containing a gel-state electrolyte and an electrolytic solution, where the solidification ratio of the electrolyte was 90%; the metallic lithium layer on the negative electrode plate side was dissolved and a first gel electrolyte membrane was formed at the corresponding position thereof; and a second gel electrolyte membrane was formed in the gap between the positive electrode plate side and the polyvinylidene difluoride microspheres of the separator. The thickness a of the first gel electrolyte membrane was 2 µm, and the thickness c of the second gel electrolyte membrane was 0.5 µm.

### Example 2:

This example is substantially the same as Example 1, except that the thickness a of the first gel electrolyte membrane was different. In this example, the thickness a of the first gel electrolyte membrane was 4 µm.

### Example 3:

This example is substantially the same as Example 1, except that the thickness c of the second gel electrolyte membrane was different. In this example, the thickness c of the second gel electrolyte membrane was 0.8 µm.

### Example 4:

This example is substantially the same as Example 1, except that the areal capacity b of the negative electrode plate was different. In this example, the areal capacity b of the negative electrode plate was 7 mAh/cm².

### Example 5:

This example is substantially the same as Example 4, except that the solidification ratio of the electrolyte was different. The solidification ratio of the electrolyte in this example was 70%.

### Example 6:

This example is substantially the same as Example 4, except that the solidification ratio of the electrolyte was different. The solidification ratio of the electrolyte in this example was 62%.

### Example 7:

This example is substantially the same as Example 4, except that the solidification ratio of the electrolyte was different. The solidification ratio of the electrolyte in this example was 94%.

### Example 8:

This example is substantially the same as Example 4, except that the thickness a of the first gel electrolyte membrane was 1, and the areal capacity b of the negative electrode plate was 7; the ratio of the thickness a of the first gel electrolyte membrane to the areal capacity b of the negative electrode plate was 0.14.

### Example 9:

This example is substantially the same as Example 4, except that the thickness a of the first gel electrolyte membrane was 9, and the areal capacity b of the negative electrode plate was 7; the ratio of the thickness a of the first gel electrolyte membrane to the areal capacity b of the negative electrode plate was 1.28.

### Comparative Example 1:

This comparative example is substantially the same as Example 1, except that the solidification ratio of the electrolyte was different. The solidification ratio of the electrolyte in this comparative example was 98%.

### Comparative Example 2:

This comparative example is substantially the same as Example 1, except that the thickness a of the first gel electrolyte membrane was different, and the ratio of the first gel electrolyte membrane a to the areal capacity b of the negative electrode plate was different accordingly. In this comparative example, the thickness a of the first gel electrolyte membrane was 11 µm, and a/b was 2.62.

### Comparative Example 3:

This comparative example is substantially the same as Example 1, except that the thickness a of the first gel electrolyte membrane was different, and the ratio of the first gel electrolyte membrane a to the areal capacity b of the negative electrode plate was different accordingly. In this comparative example, the thickness a of the first gel electrolyte membrane was 8 µm, and a/b was 1.90.

### II. Test method

### 1) Thickness test of gel electrolyte membranes:

Slices were taken from a direction of the positive and negative electrode plates perpendicular to active material layers, and cut surfaces were photographed by using a scanning electron microscope to observe the thickness of the gel electrolyte membranes on the surfaces of the positive and negative electrode active material layers.

### 2) Areal capacity test:

The negative electrode plate was assembled with metal lithium into a button battery, which was discharged at a rate of 0.1C to 0.01V at room temperature, and then charged at 0.1C to 1.5V. The areal capacity of the negative electrode plate was obtained by dividing the charge capacity by the area of the negative electrode plate.

### 3) Discharge capacity retention rate test:

At room temperature, the secondary battery was charged to the upper limit voltage at a rate of 1/3C, and then discharged to the lower limit voltage at 0.33C and 2C, respectively. The capacity retention rate of the secondary battery discharged at a rate of 2C was calculated with the discharge capacity at a rate of 0.33C as the nominal capacity reference set. The discharge capacity retention rate reflects the rate capability of the secondary battery.

### (4) Cycle life test:

At room temperature, the secondary battery was charged to the upper limit voltage at a rate of 1/3C and charged to 0.05C at a constant voltage, allowed to stand for 10 min, then discharged to the lower limit voltage at a rate of 1/3C, and allowed to stand for 10 min; the above charging and discharging process was repeated, and the ratio of the discharge capacity in each cycle to the discharge capacity in the first cycle was recorded, and the number of cycles was recorded until the ratio was ≤ 80%.

### 5) Volumetric energy density test:

At room temperature, the secondary battery was charged to the upper limit voltage at a rate of 1/3C, and then discharged to the lower limit voltage at a rate of 1/3C, to obtain an energy during the discharging process of the secondary battery. Volumetric energy density (Wh/L) of secondary battery = energy during discharging of secondary battery/volume of secondary battery.

### 6) Solidification ratio test of electrolyte:

After the electrolyte was heated from room temperature to 100 °C at a heating rate of 5 °C/min to 20 °C/min, the ratio of the residual weight to the initial weight was the solidification ratio.

The parameters and performance test data of the secondary batteries in the above examples and comparative examples are shown in Table 1.

**Table 1**

| Item | Solidification ratio (%) | a | b | a/b | c | 2C discharge capacity retention rate (%) | Cycle life (cycles) | Volumetric energy density (Wh/L) |
|---|---|---|---|---|---|---|---|---|
| Example 1 | 90 | 2 | 4.2 | 0.47 | 0.5 | 88% | 1080 | 735 |
| Example 2 | 90 | 4 | 4.2 | 0.95 | 0.5 | 83% | 1280 | 716 |
| Example 3 | 90 | 2 | 4.2 | 0.47 | 0.8 | 84% | 1137 | 721 |
| Example 4 | 90 | 2 | 7 | 0.28 | 0.5 | 82% | 1025 | 778 |
| Example 5 | 70 | 2 | 7 | 0.28 | 0.5 | 88% | 955 | 780 |
| Example 6 | 62 | 2 | 7 | 0.28 | 0.5 | 88% | 804 | 778 |
| Example 7 | 94 | 2 | 7 | 0.28 | 0.5 | 79% | 1309 | 740 |
| Example 8 | 90 | 1 | 7 | 0.14 | 0.5 | 83% | 815 | 761 |
| Example 9 | 90 | 9 | 7 | 1.28 | 0.5 | 72% | 987 | 718 |
| Comparative Example 1 | 98 | 2 | 4.2 | 0.47 | 0.5 | 61% | 922 | 695 |
| Comparative Example 2 | 90 | 11 | 4.2 | 2.62 | 0.5 | 43% | 927 | 637 |
| Comparative Example 3 | 90 | 8 | 4.2 | 1.90 | 0.5 | 65% | 988 | 678 |

As can be seen from Table 1, the secondary batteries in Examples 1 to 9 have good discharge capacity retention rate and cycle performance, and also have high volumetric energy density. Compared with Example 1, only the solidification ratio of the electrolyte is different in Comparative Example 1. As the solidification ratio of the electrolyte in Comparative Example 1 is too large, the discharge capacity retention rate, the cycle life, and the volumetric energy density of the secondary battery are reduced. Compared with Example 1, the thickness a of the first gel electrolyte membrane in Comparative Example 2 is too large, the value of a/b is accordingly too large, and the discharge capacity retention rate, the cycle life, and the volumetric energy density of the secondary battery are significantly reduced. Compared with Example 1 and Example 2, the thickness a of the first gel electrolyte membrane in Comparative Example 3 is different, the value of a/b is accordingly too large, and the discharge capacity retention rate, the cycle life, and the volumetric energy density of the secondary battery are also significantly reduced.

By comparison between Example 6 and Example 4, it can be found that when the solidification ratio of the electrolyte is less than 70%, the cycle life of the secondary battery is significantly reduced. As can be seen from the comparison between Example 7 and Example 4, when the solidification ratio of the electrolyte is higher than 90%, although the cycle life thereof is improved, the discharge capacity retention rate and the volumetric energy density of the secondary battery are reduced. It is indicated that the solidification ratio of the electrolyte is controlled within the range of 70% to 90%, such that the balance between the cycle performance and the energy density can be further obtained, thereby enabling the electrolyte to have better comprehensive performance.

As can be seen from the comparison between Example 8 and Example 4, the thickness a of the first gel electrolyte membrane in Example 8 is less than 2, the value of a/b is accordingly less than 0.28, and thus the cycle life of the secondary battery is significantly reduced. As can be seen from the comparison between Example 9 and Example 4, the thickness a of the first gel electrolyte membrane in Example 9 is greater than 4, the value of a/b is accordingly greater than 0.95, and thus the discharge capacity retention rate, the cycle life, and the volumetric energy density of the secondary battery are all reduced. It is indicated that the comprehensive performance of the secondary battery can be further improved by controlling the thickness a of the first gel electrolyte membrane within the range of 2 to 4 and controlling the value of a/b within the range of 0.28 to 0.95.

It should be noted that the present application is not limited to the embodiments described above. The embodiments described above are merely examples, and any embodiments having a structure substantially identical to the technical concept and exerting the same functional effects within the scope of the technical solutions of the present application are all included within the technical scope of the present application. Furthermore, without departing from the spirit of the present application, various modifications that can be conceived by those skilled in the art to the embodiments, as well as other embodiments formed by combining some of the constituent elements of the embodiments, are also included within the scope of the present application.

## Claims

1. A secondary battery, comprising a positive electrode plate, a separator, a negative electrode plate, and an electrolyte; wherein
the separator is disposed between the positive electrode plate and the negative electrode plate;
the electrolyte comprises an electrolytic solution and a first gel electrolyte membrane, wherein the first gel electrolyte membrane is disposed between the negative electrode plate and the separator, a solidification ratio of the electrolyte is 60% to 95%, a thickness of the first gel electrolyte membrane is a µm, an areal capacity of the negative electrode plate is b mAh cm⁻², and a/b is 0.1 to 1.5.

2. The secondary battery according to claim 1, wherein the a/b is 0.15 to 1.2; optionally, the a/b is 0.28 to 0.95.

3. The secondary battery according to any one of claims 1 to 2, wherein the solidification ratio of the electrolyte is 70% to 90%.

4. The secondary battery according to any one of claims 1 to 3, wherein the a is 1 to 10; optionally, the a is 2 to 4.

5. The secondary battery according to any one of claims 1 to 4, wherein the b is 3 to 10; optionally, the b is 4.2 to 7.

6. The secondary battery according to any one of claims 1 to 5, wherein the electrolyte further comprises a second gel electrolyte membrane, the second gel electrolyte membrane being disposed between the positive electrode plate and the separator.

7. The secondary battery according to claim 6, wherein a thickness of the second gel electrolyte membrane is smaller than the thickness of the first gel electrolyte membrane.

8. The secondary battery according to claim 7, wherein the thickness of the second gel electrolyte membrane is c µm, and the c is 0.1 to 2.

9. The secondary battery according to any one of claims 1 to 8, wherein the electrolyte further comprises a gel electrolyte filled in internal pores of the positive electrode plate and/or the negative electrode plate.

10. The secondary battery according to any one of claims 1 to 9, wherein an active material of the negative electrode plate contains a silicon-based material.

11. The secondary battery according to claim 10, wherein a mass ratio of the silicon-based material in the active material of the negative electrode plate is ≥ 10%.

12. A method for preparing a secondary battery, comprising:
providing a negative electrode plate, and forming a metallic lithium layer on a surface of the negative electrode plate;
stacking the negative electrode plate, a separator, and a positive electrode plate in sequence to form a bare cell, wherein the metallic lithium layer is located between the negative electrode plate and the separator;
placing the bare cell in a shell, injecting electrolyte raw materials, and dissolving the metallic lithium layer, wherein the electrolyte raw materials comprise an electrolyte salt, a solvent, a polymer monomer, and an initiator; and
partially solidifying the electrolyte raw materials in the bare cell to form an electrolyte, and forming a first gel electrolyte membrane at a position where the metallic lithium layer is not dissolved.

13. The method for preparing a secondary battery according to claim 12, wherein a solidification ratio of the electrolyte is 60% to 95%, a thickness of the first gel electrolyte membrane is a µm, an areal capacity of the negative electrode plate is b mAh cm⁻², and a/b is 0.1 to 1.5.

14. The method for preparing a secondary battery according to claim 12 or 13, wherein the polymer monomer comprises one or more of a carbonate monomer, a sulfone monomer, an isocyanate monomer, an amide monomer, a nitrile monomer, a fluorinated monomer, an ether compound monomer, an ether segment-containing oligomer, and a siloxane.

15. The method for preparing a secondary battery according to any one of claims 12 to 14, wherein the initiator comprises one or more of an azo initiator, a peroxide initiator, an anionic/cationic initiator, an organometallic compound initiator, an amine catalyst initiator, and an organophosphorus initiator.

16. An electric device, comprising the secondary battery according to any one of claims 1 to 11.
